# EUROPEAN PATENT APPLICATION

(11) **EP 1 614 513 A1**
(43) Date of publication of application: **11.01.2006**
(21) Application number: 04076918.4
(22) Date of filing: 05.07.2004
(51) Int. Cl.: B27B 17/00, B25F 5/00, F16F 15/04

(54) **A combustion engine powered portable, hand-held working machine**

(71) Applicant: AKTIEBOLAGET ELECTROLUX, 105 45 Stockholm (SE)
(72) Inventor: Larsson, Håkan, 431 66 Mölndal (SE); Ribbhagen, Mårten, 414 62 Göteborg (SE)

(57) **Abstract**

A combustion engine powered, portable, hand-held working machine (1) including a machine body (2), a combustion engine in the machine body, and a number of functional members, at least one of which, a bracket (17), forms part of the machine body or is connected to the machine body, and the machine body is suspended in a handle system (6, 7) via a number of anti-vibration elements (12, 18, 19).

The anti-vibration element (18; 19) comprises a spring plate (22; 46) having a first end section (22A; 46A), a second end section (22C; 46C), and a flat intermediate, flexible section (22B; 46B, 46B") between said end sections.

The first end section (22A; 46A) of the spring plate is connected to one of said machine body with connected bracket (17) and said handle system (6, 7).

A resilient rubber body (23, 23A, 23B; 45) is secured to the second end section of the spring plate, projecting in a transversal direction from the spring plate.

The resilient rubber body forms a link between the spring plate and the other of said machine body with connected bracket (17) and said handle system (6, 7),
and a second end section of the spring plate, carrying the resilient rubber body, can oscillate in directions transversal to the plane of the second end section due to vibrations generated in a machine, such that transfer of said vibrations in a transversal direction between said first and second members can be dampened.

## Description

### TECHNICAL FIELD

The present invention relates to a combustion engine powered, portable, hand-held working machine including a machine body, a combustion engine in the machine body, and a number of functional members, at least one of which, a bracket, forms part of the machine body or is connected to the machine body, and the machine body is suspended in a handle system (6, 7) via a number of anti-vibration elements. The invention also concerns the anti-vibration element per se.

### BACKGROUND OF THE INVENTION

Vibrations are a severe problem in connection with combustion engine powered, portable, hand-held working machines in general, and this is particularly true as far as cut-off machines, also referred to as power cutters, are concerned. Such machines include a rotational cutting blade, which in operation may cause vibrations which add to the vibrations which are generated by the combustion engine. Similar problems exist also in connection with other internal combustion engine powered working machines, such as chain saws.

It is known in the art to suspend the machine body, including the engine and the cutting or sawing equipment, in a handle system via anti-vibration elements. The handle system and the anti-vibration elements are designed to give as low vibration levels and comfortable usage as possible. However, the maximum amount of movement that is possible is limited for a number of technical reasons. And when the machine is used forces from the work unit will push the machine body in a longitudinal direction relative to the handle system. The stiffness of the anti-vibration elements must be so large that their maximum suspension in a longitudinal direction will hardly ever be overcome during work operations. Therefore they will also have a very limited suspension in a lateral direction.

### BRIEF DISCLOSURE OF THE INVENTION

It is a purpose of the present invention to address the above problem and to still further improve the anti-vibration of working machines of the types mentioned in the preamble. According to a first aspect of the invention, this is achieved therein
- that at least one anti-vibration element comprises a spring plate having a first end section, a second end section, and a flat intermediate, flexible section between said end sections,
- that the first end section of the spring plate is connected to one of said machine body with connected bracket and said handle system,
- that a resilient rubber body is secured to the second end section of the spring plate, projecting in a transversal direction from the spring plate
- that said resilient rubber body forms a link between the spring plate and the other of said machine body with connected bracket and said handle system, and
- that the second end section of the spring plate, carrying the resilient rubber body, can oscillate in directions transversal to the plane of the second end section due to vibrations generated in the machine, such that transfer of said vibrations in the transversal direction between said first and second members can be dampened.

The spring plates therefore increases the possible suspension in a lateral direction compared to the handle system and thereby the total vibrations are better dampened. Further aspects and features of the invention are given in the appending independent claims or will be apparent from the following, detailed description.

### BRIEF DESCRIPTION OF DRAWINGS

In the following detailed description of the invention, reference will be made to the accompanying drawings, in which
- Fig. 1: is a perspective left hand view of a cut-off machine in which the invention is implemented,
- Fig. 2: shows rear parts of the same machine as viewed obliquely from the right,
- Fig. 3: is an exploded view of a rear part of a rear handle, including anti-vibration elements according to a first embodiment of the invention,
- Fig. 4: is a side view of the rear part of the rear handle,

- Fig. 5: is a rear view showing the rear part of the rear handle,
- Fig. 6: is a cross-sectional view of the anti-vibration elements of the first embodiment as shown in Fig. 3,
- Fig. 7: shows one half of a member which is connected to the machine body, provided to co-operate with the first embodiment of the anti-vibration elements of the invention, and
- Fig. 8: is a longitudinal cross-sectional view of an anti-vibration element and connected parts of a front handle and the rear handle according to a second embodiment of the invention.

### DETAILED DESCRIPTION OF THE INVENTION

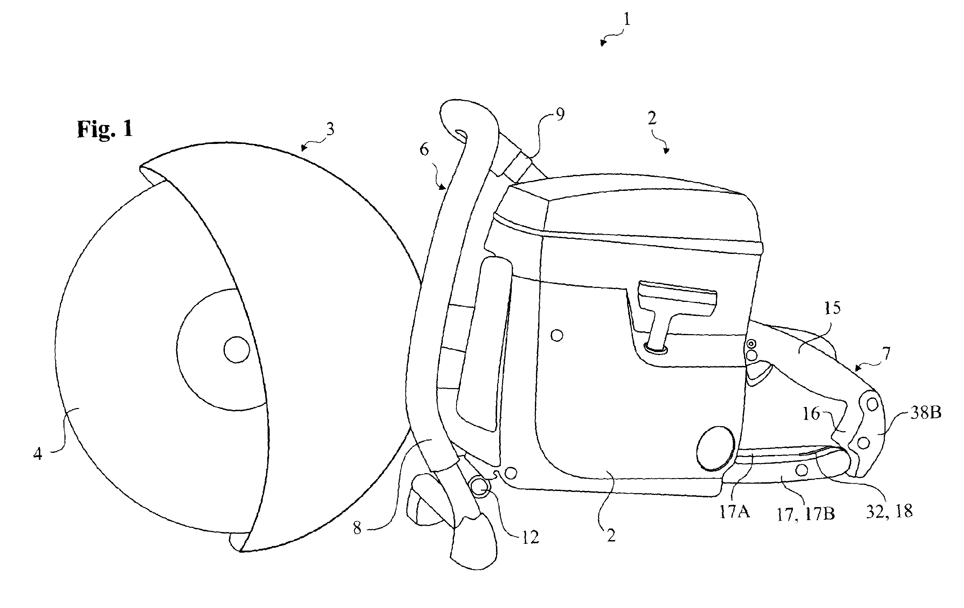

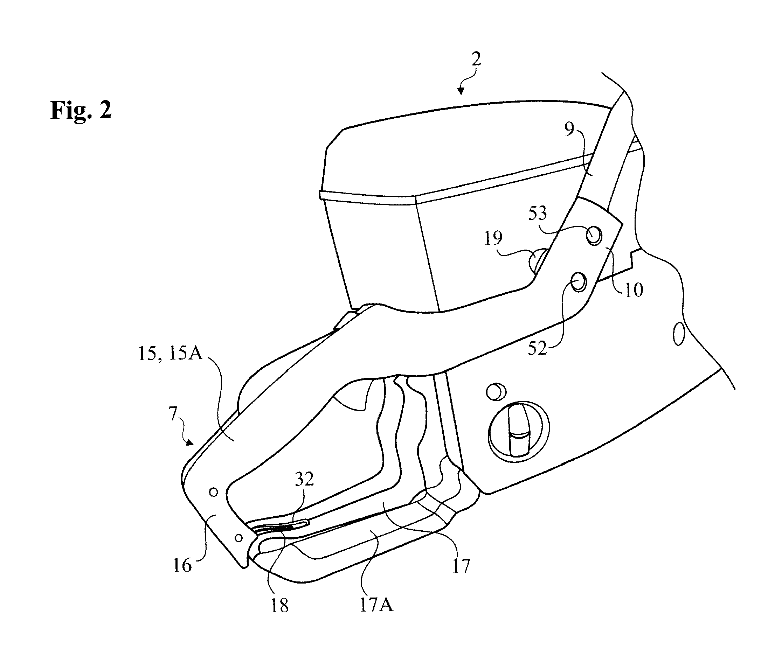

With reference first to Figs. 1 and 2, a combustion engine powered, portable, hand-held cut-off machine is designated 1. It includes a machine body 2 with an engine and a cutting unit 3 with a rotational cutter blade 4. The machine body 2 and the cutting unit 3 are suspended in a handle system (handle assembly) via anti-vibration elements, of which one or more are designed according to the invention. The handle system includes a front handle 6 and a rear handle 7. The front bottom section 8 of the front handle 6 is connected to the machine body 2 via a first anti-vibration element 12.

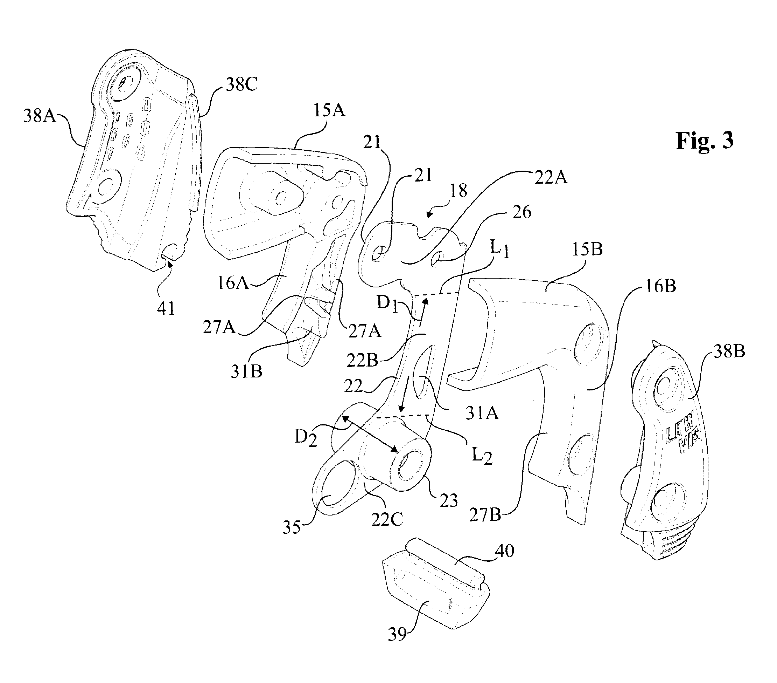

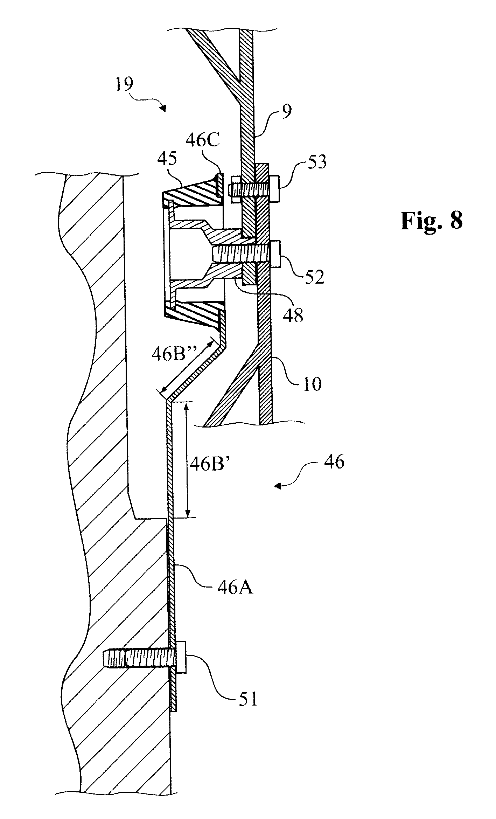

The rear handle 7 includes a grip 15 and a rear end section 16, which is connected to a bracket 17 via a second anti-vibration element 18. The anti-vibration element 18 is designed according to a first preferred embodiment of the invention and will be described in detail in the following with reference to Figs. 3-7. The bracket 17 is rigidly connected to the machine unit 2. A right hand rear section 9 of the front handle 6 is rigidly connected to a right hand front section 10 of the rear handle 7. The integrated handle system is connected to the machine body 2 via a third anti-vibration element 19 in the region of connection between the front and rear handles of the handle system. The third anti-vibration element 19 is designed according to a second embodiment of the invention, which will be described in some detail in the following with reference to Fig. 8. The two embodiments can of course be used separately or together.

The grip 15 and the rear end section 16 consist of two halves 15A, 15B and 16A, 16 B, respectively. The right hand grip half 15A is extended to form said right hand front section 10 of the rear handle 7, Fig. 2. In Fig. 3, only rear sections of the grip halves 15A and 15B are shown.

The anti-vibration element 18 consists of a flat spring plate 22, which could also be called plate spring or leaf spring, made of spring steel or ordinary steel and a rubber body 23. The spring plate 22 has a thickness of 1.5 mm according to the embodiment and has the general shape of a double dog-leg, including a first end section 22A, an intermediate section 22B, and a second end section 22C. The width and contour of the spring plate 22 approximately correspond to the width and contour of the rear end section 16.

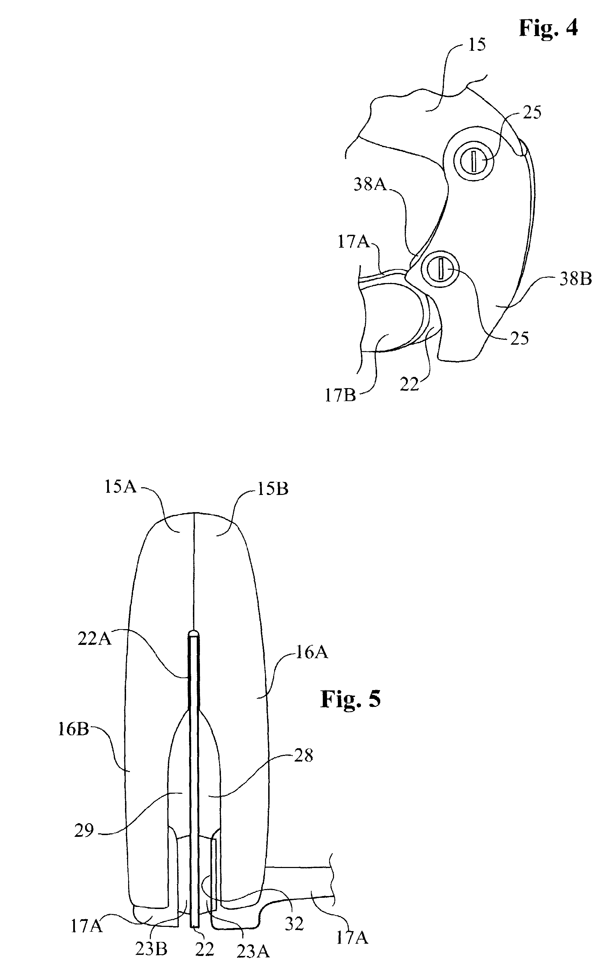

The first end section 22A of the spring plate 22 extends in the direction of the grip 15 from the nose tip 21 to a line L1 in the region of the top part of the rear end sections 16A, 16B. The first end section 22A is clamped between the grip halves 15A and 15B, and is secured in the clamped position, Fig. 5, by means of screws 25, Fig. 4, extending through holes 26 in said first end section 22A. The intermediate, unclamped section 22B extends from the line L1 to a line L2, which is parallel with line L1 and is adjacent to the rubber body 23 in the second end section 22C. The length D1 of the intermediate section 22B in the longitudinal direction of the intermediate section, which is the distance between the lines L1 and L2, is longer than the total length D2 of the rubber body 23 in the transversal direction of the spring plate. The dimensions of the intermediate section 22B in combination with the features of the spring steel afford desired properties to the spring plate 22 in order to dampen the transfer of vibrations in the transversal direction from the machine body to the handle system, in which the machine body 2 and the cutting unit 3 are suspended.

The intermediate section 22B of the spring plate 22 forms an angle of about 100-110° to the first end section 22A and extends inside the rear end section 16, along the entire length thereof, between the halves 16A and 16B and has approximately the same width as the rear end section 16. However, those parts 27A, 27B of said halves 16A and 16B, which face one another are symmetrically recessed, such that a central gap is formed on the first side (gap 28) as well as on the second side (gap 29) of the spring plate 22. These gaps 28, 29 have a sufficient width to allow the spring plate 22 to be deflected and to oscillate in the lateral (transversal) directions in the rear end section because of vibrations, causing such vibrations to be dampened in the lateral directions of the machine 1, i.e. in directions which are transversal to the plane of the spring plate 22 at rest. A hole 31A in the intermediate section 22B has a slightly greater size in all directions than a protrusion 31B which extends from the right hand rear end section half 16A through the hole 31A into a receiving socket in the left hand rear end section half 16B for the purpose of strengthening the assembled rear end section member 16.

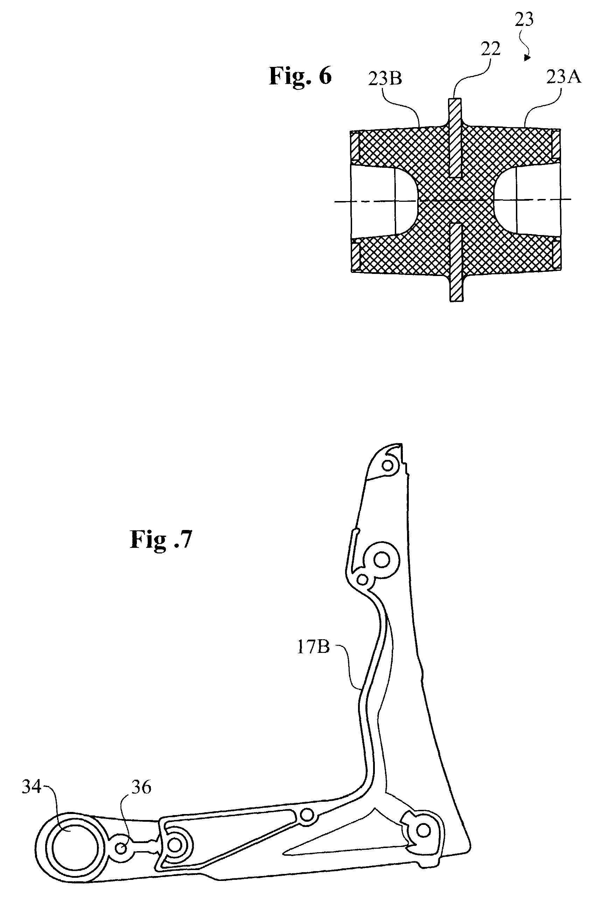

The second end section 22C of the spring plate 22 forms an angle of about 110° to the intermediate section 22B and extends into the bracket 17, which also consists of two halves 17A, 17B. The left hand bracket half 17B is shown in Fig. 7. Between the bracket halves 17A, 17B, in the rear parts thereof, there is provided a recessed gap 32 which also has a sufficient width for allowing the end section 22C of the spring plate 22 to be deflected and to oscillate in the lateral/transversal directions. Further, a resilient rubber body 23, having a hardness of about 38-42° Shore, is secured to the said second end section 22C. The rubber body has a design known per se, shown in Fig. 6, including two identical parts in the form of truncated cone protrusions 23A and 23B, extending in opposite transversal directions from the spring plate 22. The protrusions extend in a manner known per se into correspondingly shaped sockets 34 in the bracket halves 17A, 17B. One such socket 34 in the left hand bracket half 17B is shown in Fig. 7. The resilient rubber protrusions 23A, 23B form part of a resilient, anti-vibrating link between the handle system and the machine body 2, more particularly between the rear handle 7 and the machine body 2, wherein the rubber protrusions 23A, 23B, in a manner known per se, dampen transfer of vibrations from the machine body 2 which are parallel with the plane of the spring plate 22 at rest, while those parts 22B and 22C of the spring plate 22 which are not clamped but can oscillate, dampen the transfer of vibrations in the transversal/lateral directions. A hole 35 is also provided in the second end section 22C in front of the rubber body 23. A safety pin, not shown, extends through the hole 35, secured in holders in the bracket halves 17A, 17B. One such holder 36 in bracket half 17B is shown in Fig 7.

Instead of improving the anti-vibration properties of the machine 1 by means of the anti-vibration element 18, which is mounted as a link in the rearmost part of the machine 1 as described above, it is possible, according to an alternative problem solution, to provide balance weights of sufficient mass in connection to the rear handle 7. More particularly, such balance weights are suitably placed in or on the rear end section member 16, which is the location where any balance weights are most efficient as anti-vibration elements. It is estimated that the total mass of such balance weights must amount to about 500 gram in order to provide an anti-vibration in the same order as that of the anti-vibration element 18 of the invention, as far as the machine 1 is concerned. The balance weight approach no doubt has some significant merits, but an extra mass of about 500 gram to the machine can seem to be rather too much. Therefor that problem solution is not used, at least not to its full extent, according to the invention as primarily claimed. According to an embodiment of the present invention, however, the provision of one or more balance weights of more moderate mass is used in combination with the anti-vibration element 18. In Figs. 1, 3 and 4, two balance weights are designated 38A and 38B, respectively. Balance weight 38A is attached and secured by means of the screws 25 to the right hand side of the rear end section 16, covering the end section half 16A, while the balance weight 38B is correspondingly attached on the opposite side, covering the end section half 16B on the left hand side. The two balance weights 38A and 38B contact each other on the rear side of the rear end section 16, and a fin 38C on balance weight 38A and a correspondingly designed and located groove (not shown) in the opposite balance weight 38B provide a sealing effect, which prevents dirt and litter from entering the gap 29 and the interior of the rear end section 16 from the rear, and hinder the anti-vibration element 18 from operating properly. According to the embodiment, the balance weights 38A and 38B are made of zinc, which is one of several conceivable materials, and have a total weight of 237 gram.

A stud 39 made of rubber is secured to the bottom ends of the two balance weights 38A and 38B by means of a transversal protrusion 40, which can be pressed into and secured in a correspondingly designed groove 41 in the two weights 38A, 38B.

Reference is now made to Fig. 8, which shows a longitudinal sectional view of rigid joint between the right hand rear section of the front handle 6 and the right hand front section of the rear handle 7, and a flexible connection between the handle system and the machine body 2 in the region of said joint via the third anti-vibration element 19, which is designed according to a second embodiment of the invention.

The anti-vibration element 19 includes a spring plate 46 and a resilient rubber body 45, which has a hardness of about 44-48° Shore. The spring plate 46 has a first end section 46A, a second end section 46C and an intermediate section 46B. The first section 46A is connected to the machine body 2 by means of a first screw 51. The end of the right hand rear section 9 of the front handle 6 and the end of the right hand front section 10 of the rear handle 7 are clamped together and joined by means of second and third screws 52, 53. In contrast to the anti-vibration element 18 according to the first embodiment of the invention, the anti-vibration element 19 according to the second embodiment of the invention includes only a single, resilient rubber body 45, which has the shape of a sleeve, protruding in one lateral direction from the second end section 46C. More specifically, the rubber body 45 protrudes in a lateral direction towards the machine body 2 (which is shown schematically in Fig. 8) transversally to the longitudinal direction of the machine 1 and to the longitudinal direction of the spring plate 46 as well. The inside surface of the rubber body/sleeve 45 is cylindrical, while the outside shape is that of a truncated cone, a design which is known per se in connection with resilient rubber elements. An inner end of the rubber body 45 is bonded to said second end section 46C, while a nut 48 is bonded to the outer end of the rubber body 45. The second screw 52 also serves to connect the handle system to the protruding end of the rubber body 45 via the nut 48.

It must also be understood that this second embodiment of anti-vibration element 19 could also be used in other positions between the handle system and the machine, e.g. replacing anti-vibration 12 after appropriate changes to fasten it. Further it could also be used for a similar handle system where bracket 17 is integrated in the handle system, usually together with fuel tank and possibly carburettor and air filter/s into a big handle system unit. A good location for such an anti-vibration element would be in the bottom right part of the machine body (2).

The intermediate section 46B of the spring plate 46 in turn includes two flat sections, a section 46B', which is an extension of the first section 46A, and a second flat section 46B", which forms part of an angled transition between the end sections 46A and 46C of the spring plate 46. Due in the first place to the first flat intermediate section 46B', the spring plate 46 can be deflected and oscillate in said lateral/transversal direction, wherein the transfer of vibrations in that direction from the machine body 2 to the handle system can be dampened. For this purpose, the material, width, thickness and length of the spring plate in the flat sections 46B' and 46B" are chosen such as to obtain desirable spring characteristics. Typically, at least the length 46B', but optionally also the length 46B", exceeds the axial length of the rubber body 45. Vibrations in the directions which are parallel with the plane of the cutter disc 4 can be dampened in a manner per se by means of the rubber body 45, which according to the embodiment is designed conventionally in a manner which is also known per se.

For the two embodiments plate springs made of spring steel or ordinary steel has been discussed. However, the plate springs can also be made of another suitable metallic material or can be made of a plastic material, e.g. glassfibre or carbonfibre reinforced plastic. Further the hand-held machine could also have another type of engine, such as electric, hydraulic or pheumatic, though dampening of vibrations is not as critical for those.

## Claims

1. A combustion engine powered, portable, hand-held working machine (1) including a machine body (2), a combustion engine in the machine body, and a number of functional members, at least one of which, a bracket (17), forms part of the machine body or is connected to the machine body, and the machine body is suspended in a handle system (6, 7) via a number of anti-vibration elements (12, 18,19),**characterised in**
- **that** at least one anti-vibration element (18; 19) comprises a spring plate (22; 46) having a first end section (22A; 46A), a second end section (22C; 46C), and a flat intermediate, flexible section (22B; 46B', 46B") between said end sections,
- **that** the first end section (22A; 46A) of the spring plate is connected to one of said machine body with connected bracket (17) and said handle system (6, 7),
- **that** a resilient rubber body (23,23A,23B; 45) is secured to the second end section of the spring plate, projecting in a transversal direction from the spring plate
- **that** said resilient rubber body forms a link between the spring plate and the other of said machine body with connected bracket (17) and said handle system (6, 7), and
- **that** the second end section of the spring plate, carrying the resilient rubber body, can oscillate in directions transversal to the plane of the second end section due to vibrations generated in the machine, such that transfer of said vibrations in the transversal direction between said first and second members can be dampened.

2. Machine according to claim 1, wherein the first end section (22A) of the spring plate is connected to a rear end section (16) of a rear handle (7) of the machine and said resilient rubber body forms a link between the spring plate and the bracket (17), which is rigidly connected to the machine body and extends backwards from the rear, bottom part of the machine body.

3. Machine according to claim 1, wherein the first end section (46A) of the leaf spring (46) is connected to the machine body (2) and said resilient rubber body forms a link between the spring plate (46) and the handle system (6, 7) in the region of a joint connecting a rear part (9) of a front handle (6) with a front part (10) of a rear handle (7).

4. Machine according to any of claims 1-3, wherein said intermediate, flexible section (22B; 46B', 46B") of the spring plate has a length in the direction between said first and second sections which exceeds the length of projection of the rubber body in the transversal direction from one side of the spring plate.

5. Machine according to claim 2, wherein the resilient rubber body or resilient rubber bodies (23A,23B) project in the transversal direction from both opposite sides of the spring plate, said intermediate, flexible section (22B) of the spring plate having a length which exceeds the total length of the rubber body or rubber bodies in their transversal direction.

6. Machine according to any of claims 1-2, wherein the spring plate is centred in longitudinal gaps (28,29,32), which are provided in the rear end section (16) of rear handle (7) and in the bracket (17), said gaps allowing said intermediate, flexible section (22B) and said second end section (22C) of the spring plate to oscillate in the transversal direction.

7. Machine according to any of claims 1-6, wherein the spring plate consists of a piece of 1-2 mm thick spring steel.

8. Machine according to any of claim 1-6, wherein balance weights (38A, 38B) are secured to the rear terminating section (16) of the rear handle (7).

9. Machine according to claim 6, wherein the balance weights cover at least a part of the gaps (28, 29) in said rear end section (16).

10. A combustion engine powered, portable, hand-held working machine including a machine body, a combustion engine in the machine body, and a handle system including a front handle and a rear handle, wherein balance weights are secured to both sides of a rear part of said rear handle.

11. Machine according to any of claims 1-10, wherein the machine is a cut-off machine including a rotational cutter disk.
